# EUROPEAN PATENT APPLICATION

(11) **EP 3 258 426 A1**
(43) Date of publication of application: **20.12.2017**
(21) Application number: 16002726.4
(22) Date of filing: 22.12.2016
(51) Int. Cl.: G06Q 10/00, G06N 7/00, G06N 99/00

(54) **AUTOMATIC CONDITION MONITORING AND ANOMALY DETECTION FOR PREDICTIVE MAINTENANCE**

(30) Priority: 17.06.2016 US 201615185951
(71) Applicant: Business Objects Software Ltd., Dublin 1 (IE)
(72) Inventor: Wu, Ying, 69190 Walldorf (DE); Kaufmann, Malte Christian, 69190 Walldorf (DE); McGrath, Robert, 69190 Walldorf (DE); Schlueter, Ulrich, 69190 Walldorf (DE); Sitt, Simon, 69190 Walldorf (DE)
(74) Representative: Müller-Boré & Partner Patentanwälte PartG mbB

(57) **Abstract**

For a plurality of sensors, a particular sensor is indicated as a target sensor and the other sensors as input sensors. A regression model is trained using historical data from the plurality of related sensors. The trained regression model is applied to the target sensor to generate a predicted target sensor value. A difference between an actual target sensor value and the predicted target sensor value is calculated. A probability of difference for the calculated difference between the actual target sensor value and the predicted target sensor value is compared against a threshold value.

## Description

### BACKGROUND

A network of physical objects including devices, vehicles, buildings and other items, each embedded with electronics, software, sensors, and network connectivity that enables the objects to collect and exchange data, can be referred to as an "internet of things." The internet of things can enable objects to be sensed and controlled remotely across existing network infrastructure, which can enable integration of the physical world into computer-based systems. Each object can be uniquely identifiable through its embedded computing system and can be able to interoperate within existing network infrastructures, such as the Internet. The objects, or "things", can refer to a wide variety of devices such as heart monitoring implants, biochip transponders on farm animals, electric clams in coastal waters, automobiles with built-in sensors, or other types of objects.

### SUMMARY

The present disclosure describes methods and systems, including computer-implemented methods, computer program products, and computer systems for automatic anomaly detection for predictive maintenance.

In an implementation, for a plurality of sensors, a particular sensor is indicated as a target sensor and the other sensors as input sensors. A regression model is trained using historical data from the plurality of related sensors. The trained regression model is applied to the target sensor to generate a predicted target sensor value. A difference between an actual target sensor value and the predicted target sensor value is calculated. A probability of difference for the calculated difference between the actual target sensor value and the predicted target sensor value is compared against a threshold value.

The above-described implementation is implementable using a computer-implemented method; a non-transitory, computer-readable medium storing computer-readable instructions to perform the computer-implemented method; and a computer system comprising a computer memory interoperably coupled with a hardware processor configured to perform the computer-implemented method/the instructions stored on the non-transitory, computer-readable medium.

The subject matter described in this specification can be implemented in particular implementations so as to realize one or more of the following advantages. First, automatic predictive maintenance can be performed without the collection, validation and labelling of equipment states. Second, automatic predictive maintenance can reduce maintenance costs, prevent equipment breakdowns, prevent risk of collateral damage, reduce secondary failures, and prolong equipment life. Third, automatic predictive maintenance can be performed in real time without human intervention. Fourth, underlying relationships between sensors in a sensor network can be identified. Fifth, automatic predictive maintenance can be performed in a generic way, without requiring specific configuration or pre-knowledge. Other advantages will be apparent to those of ordinary skill in the art.

The details of one or more implementations of the subject matter of this specification are set forth in the accompanying drawings and the description below. Other features, aspects, and advantages of the subject matter will become apparent from the description, the drawings, and the claims.

### DESCRIPTION OF DRAWINGS

FIG. 1 is a block diagram of an example system for automatic anomaly detection for predictive maintenance, according to an implementation.
FIG. 2 illustrates an example system for anomaly detection, according to an implementation.
FIG. 3 is a flowchart of an example method for generating and training a regression model, according to an implementation.
FIG. 4 is a flowchart of an example method for applying a regression model and building probability models, according to an implementation.
FIG. 5 is a block diagram of an automatic condition monitoring component for automatic threshold optimization, according to an implementation.
FIG. 6 illustrates example historical data for a group of related sensors, according to an implementation.
FIG. 7 is a block diagram that illustrates correlations between sensors, according to an implementation.
FIG. 8 is an exemplary graph displaying normal and anomalous sensor values, according to an implementation.
FIG. 9 is a block diagram of an exemplary computer system used to provide computational functionalities associated with described algorithms, methods, functions, processes, flows, and procedures for automatic anomaly detection for predictive maintenance as described in the instant disclosure, according to an implementation.

Like reference numbers and designations in the various drawings indicate like elements.

### DETAILED DESCRIPTION

The following detailed description describes automatic anomaly detection for predictive maintenance and is presented to enable any person skilled in the art to make and use the disclosed subject matter in the context of one or more particular implementations. Various modifications to the disclosed implementations will be readily apparent to those skilled in the art, and the general principles defined herein may be applied to other implementations and applications without departing from scope of the disclosure. Thus, the present disclosure is not intended to be limited to the described or illustrated implementations, but is to be accorded the widest scope consistent with the principles and features disclosed herein.

Predictive maintenance can be used to capture equipment behavior, predict equipment failure with sufficient warning before failures occur, and prevent occurrence of failures by performing maintenance. Monitoring for future possible failures allows maintenance to be planned before an actual failure occurs. Using predictive maintenance techniques, equipment status can be monitored in real time and failure alarms can be arisen automatically when failure is likely to occur. Benefits of using predictive maintenance includes minimizing maintenance cost, avoiding equipment breakdown, preventing risk of collateral damage and secondary failure, prolonging equipment life, etc.. With predictive maintenance, condition monitoring can be performed which includes using sensors included in equipment to monitor the running of the equipment. Sensor data can be collected at a given frequency from the sensors. The sensor information can represent equipment states in a series of time.

In a supervised predictive maintenance approach, each sensor record can be labelled to indicate whether there is a failure occurring to the equipment when the sensor record is collected. Supervised learning algorithms can be used to analyze the sensor information with the purpose of predictive maintenance. Time series analysis and trend analysis can be used to monitor whether the equipment is trending towards failure and to predict future possible behavior.

Supervised predictive maintenance can pose a number of challenges. The use of and the number of sensors in sensor networks continues to increase, as does a rate of data collection from sensors in sensor networks. An increasing number of sensors and sensor data records can result in a difficulty in attempting to label all sensor records. Moreover, it can be challenge to determine and validate equipment status. Equipment failures can be regarded as rare events, and can be hard to identify and label correctly. Data may need to be collected for a long time before data indicating an equipment failure is detected. Supervised approaches can include manual configuration of supervised learning algorithms, including multiple types of equipment with various types of sensors. Instead of using a supervised approach for predictive maintenance, an automatic approach for condition monitoring and predictive maintenance can be used, as described in more detail below.

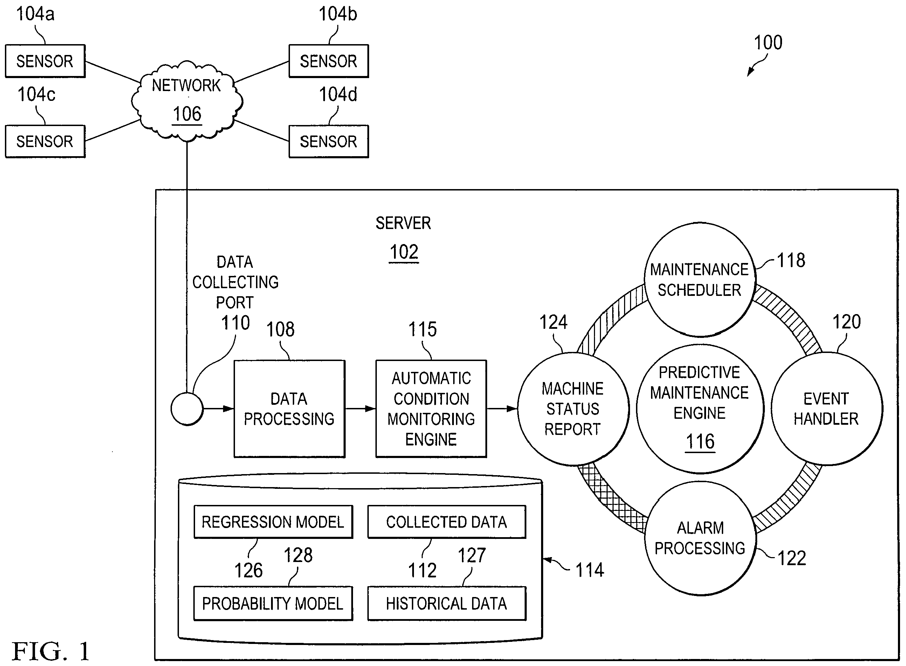

FIG. 1 is a block diagram of an example system 100 for automatic anomaly detection for predictive maintenance, according to an implementation. A server 102 is connected to various sensors 104a, 104b, 104c, and 104d over a network 106. A data processing component 108 can collect data from the sensors 104a, 104b, 104c, and 104d, using a data collecting port 110, and store the received data as collected data 112 in a repository 114.

An automatic condition monitoring engine 115 included in a predictive maintenance engine 116 can analyze the collected data 112 to detect anomalies. When an anomaly is detected, a maintenance scheduler 118 can be used to schedule maintenance for a sensor associated with the detected anomaly. An event handler 120 can detect when one or more anomalies correspond to a predefined event. If an event occurs, an alarm processing component 122 can notify registered parties. For example, an alarm notification can be sent to a client device. The predictive maintenance engine 116 can be configured to generate and send machine status reports 124 to an administrator device or to other recipients.

To detect anomalies, the automatic condition monitoring engine 115 can be configured to detect and analyze relationships among a group of related sensors. A group of related sensors can be in a same item of equipment. The automatic condition monitoring engine 115 can analyze the behavior of each sensor based on the behavior of other related sensors. A sensor value for a particular sensor can be predicted by the automatic condition monitoring engine 115 from sensor values from other related sensors.

In further detail, the automatic condition monitoring engine 115 can build a regression model 126 for a given sensor based on the given sensor as a target variable and the other sensors as input variables. For example, the regression model 126 can be based on a target variable associated with the sensor 104a and input variables associated with the sensors 104b, 104c, and 104d.

Historical data 127 previously collected from the sensors 104a, 104b, 104c, and 104d can be used as training data for the regression model 126. When the regression model 126 is trained, the historical data 127 can be fed into the regression model 126 to predict expected sensor values which represent values from the sensor 104a given values of the other sensors 104b, 104c, and 104d when the sensor 104a is in a normal state.

After the collected data 112 is collected, the automatic condition monitoring engine 115 can build a probability model 128 based on differences between the actual sensor values included in the collected data 112 and the expected sensor values calculated using the regression model 126. The automatic condition monitoring engine 115 can automatically set a comparison threshold (or the threshold can be set manually).

The automatic condition monitoring engine 115 can identify sensor values with probabilities from the probability model 128 that are lower than the comparison threshold as rare and likely anomalous events. The automatic condition monitoring engine 115 can identify sensor values with probabilities from the probability model 128 that are higher than the threshold as values that represent a normal state.

The automatic condition monitoring engine 115 can build a regression model for each of the other sensors 104b, 104c, and 104d and apply a similar predictive approach as done for the sensor 104a to predict anomalous values for the other sensors. The regression model 126 and the other regression models can be applied to future data from the sensors 104a, 104b, 104c, and 104d collected using the data collecting port 110.

The automatic condition monitoring engine 115 can perform automatic anomaly detection without manually identifying and validating equipment states. Anomaly detection can be performed in real time without human involvement. Unlike a supervised approach where regression models may require configuration, the regression model 126 can be used without configurations such as preconfigured assumptions. The regression model 126 can be, therefore, more generic and applicable to different types of predictive maintenance problems. The regression model 126 and other regression models can represent the different behaviors of the different sensors and the relationships between the different sensors. Automatic predictive maintenance can be used in conjunction with supervised approaches. For example, output from the predictive maintenance engine 116 can be provided to one or more systems that implement a supervised approach for other types of predictions.

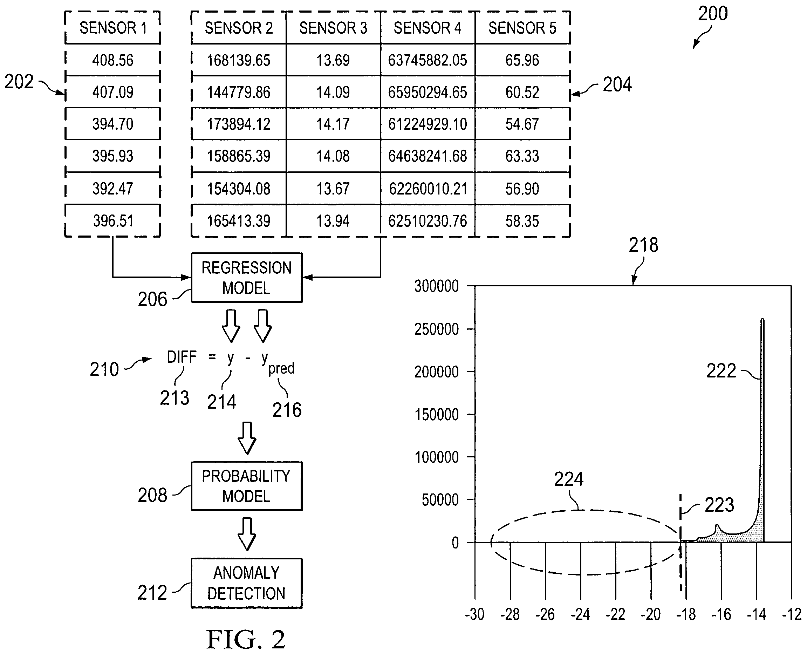

FIG. 2 illustrates an example system 200 for anomaly detection, according to an implementation. Historical data 202 associated with a first sensor and historical data 204 associated with second, third, fourth, and fifth sensors can be used to train a regression model 206. The regression model 206 can be configured, for example, so that the first sensor is represented as a target variable and the second, third, fourth, and fifth sensors are represented as input variables. The target variable associated with the regression model 206 can represent expected values for the first sensor when the first sensor is in a normal state. The input variables associated with the second, third, fourth, and fifth sensors can predict the target value associated with the first sensor.

After the regression model 206 has been trained, actual and predicted sensor values can be obtained from the first sensor. A probability model 208 that is based on a formula 210 can be used to determine whether the actual sensor values from the first sensor indicate a normal state for the first sensor or an anomalous state, in which case an anomaly detection 212 has occurred. The probability model 208 can be a Gaussian Mixture model. The formula 210 can be used to determine a difference 213 between an actual sensor value 214 from the first sensor and a predicted sensor value 216 for the first sensor. The probability model 208 can be configured so that the anomaly detection 212 occurs when the probability of difference 213 is lower than a threshold. When the probability of difference 213 is lower than a threshold for an actual sensor value, the actual sensor value can be labeled as an anomalous value. As shown in a graph 218, normal values are shown in a graph portion 222, to the right of a line 223 and anomalous values are show in a graph portion 224, to the left of the line 223.

A process similar to the process described above for the first sensor can be repeated for each of the other sensors other than the first sensor. A second regression model similar to the regression model 206 can be configured, with the second sensor as a target variable and the first, third, fourth, and fifth sensors as input variables. A third regression model can be configured, with the third sensor as a target variable and the first, second, fourth, and fifth sensors as input variables.

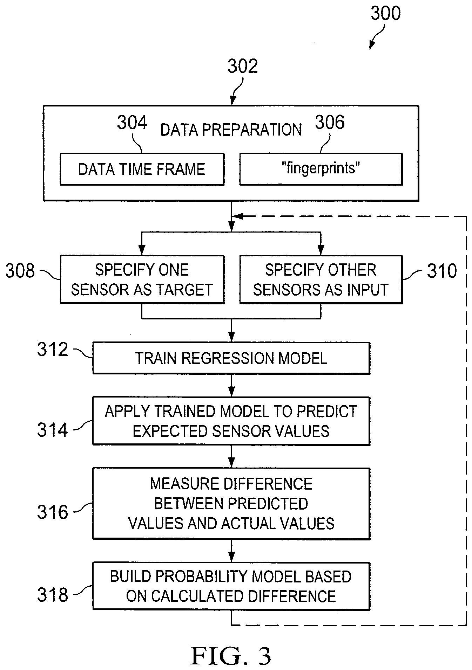

FIG. 3 is a flowchart of an example method 300 for generating and training a regression model, according to an implementation. For clarity of presentation, the description that follows generally describes method 300 in the context of the other figures in this description. However, it will be understood that method 300 may be performed, for example, by any suitable system, environment, software, and hardware, or a combination of systems, environments, software, and hardware, as appropriate. In some implementations, various steps of method 300 can be run in parallel, in combination, in loops, or in any order.

In a data preparation stage 302, historical data is prepared for regression model training. There are several ways to define what historical data should be considered as "normal", or free of anomalies. Such historical data can be also referred as reference data. Operators can specify that a certain number of last number of days / weeks (a data time frame 304) can be used for defining the reference data. Such an approach can be used to detect anomalies that occur due to sudden changes. Gradual changes due to wear or aging of a machine can be automatically considered as a new normal set of data. Operators can also explicitly select one or multiple data "fingerprints" 306, such as the behavior of a machine after maintenance or initial installation.

From 302, method 300 proceeds to 308. At 308, a particular sensor in a set of related sensors is specified as a target sensor. The target sensor can be associated with the target variable in a regression model associated with the particular sensor. From 308, method 300 proceeds to 310. At 310, other sensors in the set of related sensors other than the particular sensor are specified as input sensors. Input sensors can correspond to input variables in the regression model for the particular sensor. From 310, method 300 proceeds to 312. At 312, the regression model is trained using historical data from the set of related sensors. From 312, method 300 proceeds to 314.

At 314, the trained regression model for the particular sensor is applied to predict expected sensor values for the particular sensor. The historical data can be applied to the regression model to generate expected sensor values of the target sensor in a normal status. The historical data can be data for which normal and anomalous states are known.

From 314, method 300 proceeds to 316. At 316, differences between predicted values and actual values for the particular sensor are measured. From 316, method 300 proceeds to 318. At 318, a probability model for the particular sensor is generated based on the measured differences.

From 318, method 300 returns to 308. At 308, a different sensor other than the particular sensor is specified as a target sensor, and, at 310, the particular sensor and sensors other than the different sensor and the particular sensor are specified as input sensors. From 310, method 300 proceeds to 312, 314, 316, and 318 in association with the different sensor. Method 300 again returns to 310, and 310 through 318 are repeated iteratively until 310 through 318 have been repeated for each sensor.

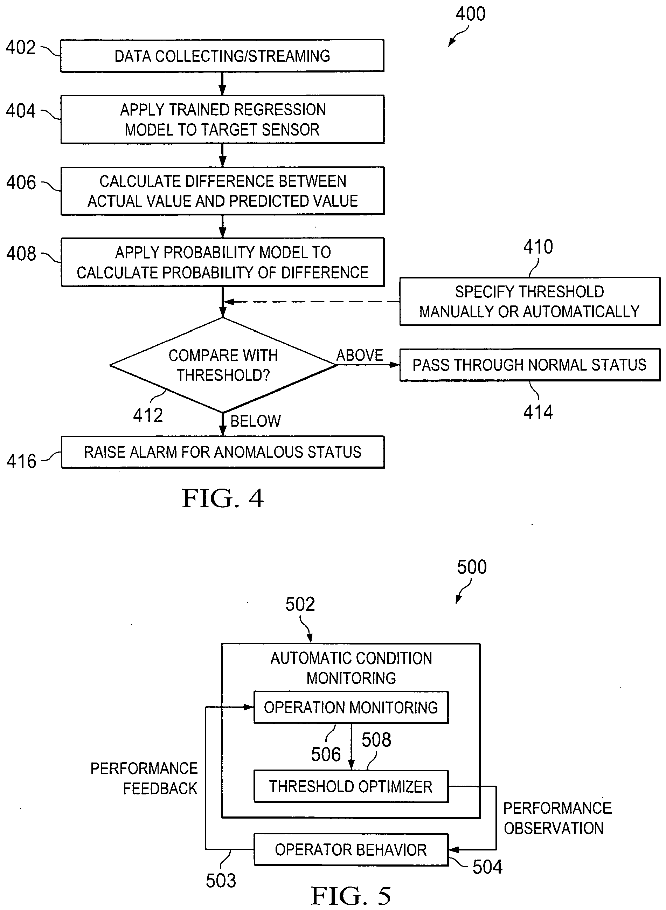

FIG. 4 is a flowchart of an example method 400 for applying a regression model and building probability models, according to an implementation. For clarity of presentation, the description that follows generally describes method 400 in the context of the other figures in this description. However, it will be understood that method 400 may be performed, for example, by any suitable system, environment, software, and hardware, or a combination of systems, environments, software, and hardware, as appropriate. In some implementations, various steps of method 400 can be run in parallel, in combination, in loops, or in any order.

At 402, data is collected from a target sensor and other sensors. From 402, method 400 proceeds to 404. At 404, the regression model is applied to the target sensor. The regression model can produce a predicted value for the target sensor given data collected from the other sensors.

From 404, method 400 proceeds to 406. At 406, a difference between the actual value from the target sensor and the predicted value for the target sensor is calculated. From 406, method 400 proceeds to 408. At 408, a probability model associated with the target sensor is applied to calculate a probability of difference for the target sensor.

From 408, method 400 proceeds to 410. At 410, a comparison threshold is specified. The comparison threshold can be specified manually or automatically / dynamically. Automatic specification of the comparison threshold is described in more detail below with respect to FIG. 5.

From 410, method 400 proceeds to 412. At 412, a determination is made as to whether the calculated probability of difference is greater than the comparison threshold.

If the probability of difference is above the threshold, method 400 proceeds from 412 to 414. At 414, a determination is made that the actual value for the target sensor represents a normal status.

If the probability of difference is at or below the threshold, method 400 proceeds to 416. At 416, a determination is made that the actual value for the target sensor represents an anomalous status. An appropriate alarm can be raised and an alarm state can be initiated in response to the anomalous status of the target sensor.

FIG. 5 is a block diagram 500 of an automatic condition monitoring component 502 for automatic threshold optimization, according to an implementation. The automatic condition monitoring component 502 can observe interactions and feedback 503 between operators (for example, human or computing equipment or both) and the automatic condition monitoring engine 502. The interactions and feedback 503 can be operator behavior 504 in predictive maintenance by an operator, or an evaluation made by an operator explicitly on accuracy of an anomaly detection, or any other form reflecting performance of automatic condition monitoring. When an operation monitoring component 506 of the automatic condition-monitoring engine 502 receives the interactions and feedback 503 from an operator, a threshold optimizer 508 can process the received information to evaluate how well condition monitoring has been performed. Evaluation information can be used to determine a new optimal comparison threshold for anomaly detection to be used in the future. The threshold optimizer 508 can automatically determine the comparison threshold as compared to a manual configuration. An operator 50 may not be aware that automatic threshold optimization is occurring.

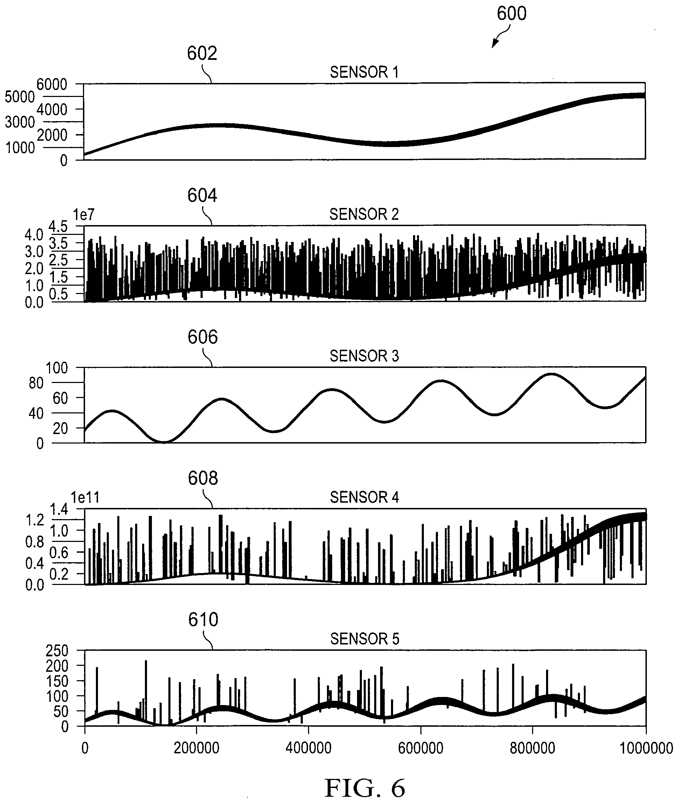

FIG. 6 illustrates example historical data 600 for a group of related sensors, according to an implementation. Graphs 602, 604, 606, 608, and 610 display data values associated with first, second, third, fourth, and fifth sensors, respectively. Each graph 602-610 displays historical values for a respective sensor that were collected at given points in time.

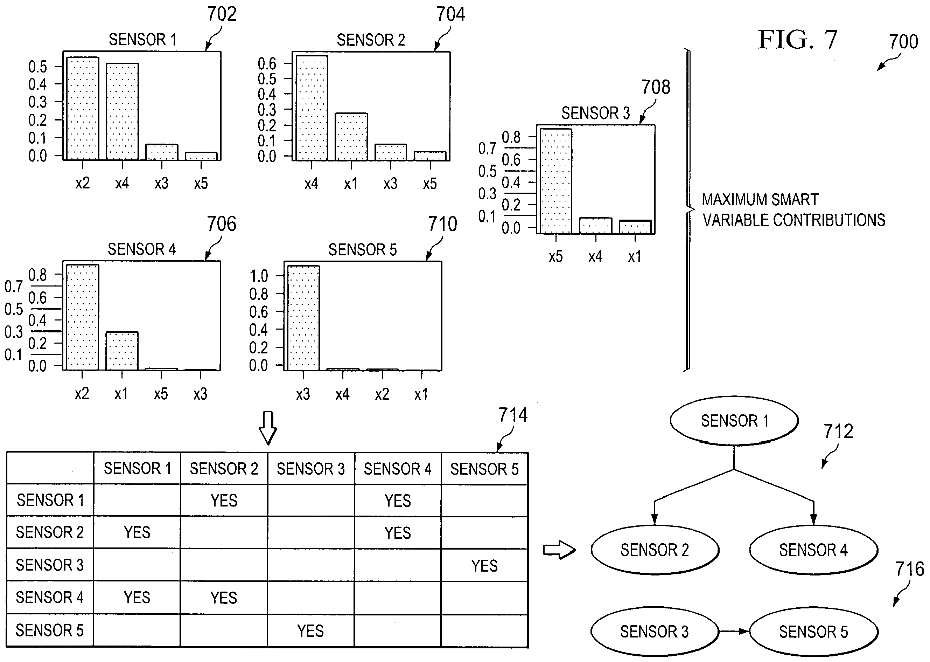

FIG. 7 is a block diagram 700 that illustrates correlations between sensors, according to an implementation. The regression model and historical data such as the historical data 600 can be used to identify correlations between sensors. When building a regression model on each sensor, key influence determination can be performed to identify the sensors that have a highest contribution or effect on a target sensor. The identified sensors are considered as most related to the target sensor.

Graphs 702, 704, 706, 708, and 710 are outputs of regression models built based on each of corresponding, respective sensors, in a set of sensors. The graphs 702, 704, 706, 708, and 710 show the identified correlated sensors that have an impact on the target sensor as a key influence. When one sensor in the set of sensors is closely related to the target sensor, the sensor may contribute more information in a regression model than other sensors that are not closely related to the target sensor. As shown, graphs 702, 704, and 706 indicate that sensors one, two, and four are correlated. Graphs 708 and 710 indicate that sensors three and five are correlated. The output of key influence evaluation of the sensors on the target sensor is summarized in a table 714 and visualized in graphs 712 and 716. The correlations between sensors one, two, and four are illustrated in the graph 712 and in the table 714. The correlation between sensor three and sensor five is illustrated in the graph 716 and in the table 714.

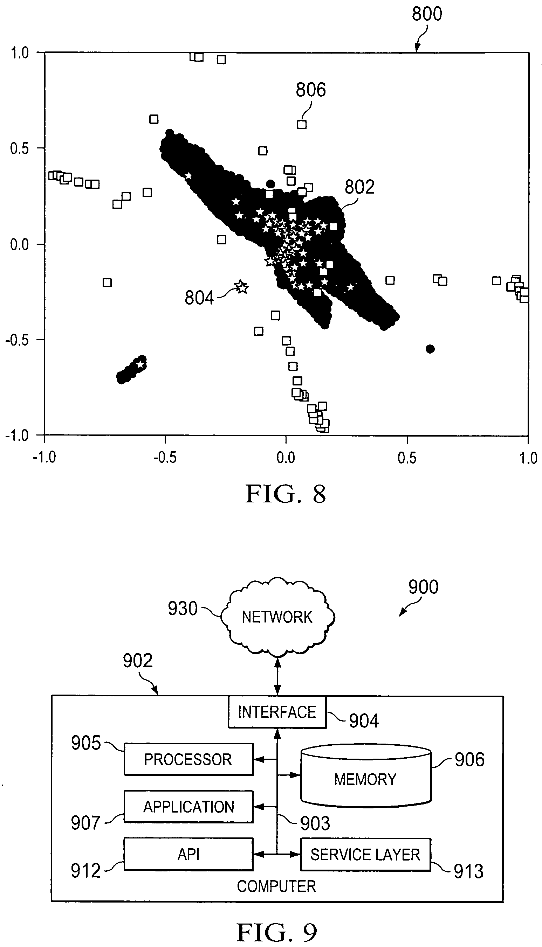

FIG. 8 is an exemplary graph 800 displaying normal and anomalous sensor values, according to an implementation. The graph 800 represents results of classifying sensor values using the regression model approach described above. Dimension reduction techniques have been used to visualize sensor records. A first, larger data cloud 802 and a second, smaller data cloud 804 represent clusters of normal sensor values corresponding to normal equipment states. Anomalous outlier sensor values, that are located on the graph 800 outside of the data clouds 802 and 804, represent anomalous equipment states and are shown as squares, such as a square 806.

FIG. 9 is a block diagram of an exemplary computer system 900 used to provide computational functionalities associated with described algorithms, methods, functions, processes, flows, and procedures as described in the instant disclosure, according to an implementation. The illustrated computer 902 is intended to encompass any computing device such as a server, desktop computer, laptop/notebook computer, wireless data port, smart phone, personal data assistant (PDA), tablet computing device, one or more processors within these devices, or any other suitable processing device, including physical or virtual instances (or both) of the computing device. Additionally, the computer 902 may comprise a computer that includes an input device, such as a keypad, keyboard, touch screen, or other device that can accept user information, and an output device that conveys information associated with the operation of the computer 902, including digital data, visual, or audio information (or a combination of information), or a GUI.

The computer 902 can serve in a role as a client, network component, a server, a database or other persistency, or any other component (or a combination of roles) of a computer system for performing the subject matter described in the instant disclosure. The illustrated computer 902 is communicably coupled with a network 930. In some implementations, one or more components of the computer 902 may be configured to operate within environments, including cloud-based computing, local, global, or other environment (or a combination of environments).

At a high level, the computer 902 is an electronic computing device operable to receive, transmit, process, store, or manage data and information associated with the described subject matter. According to some implementations, the computer 902 may also include or be communicably coupled with an application server, e-mail server, web server, caching server, streaming data server, business intelligence (BI) server, or other server (or a combination of servers).

The computer 902 can receive requests over network 930 from a client application (for example, executing on another computer 902) and responding to the received requests by processing the said requests in an appropriate software application. In addition, requests may also be sent to the computer 902 from internal users (for example, from a command console or by other appropriate access method), external or third-parties, other automated applications, as well as any other appropriate entities, individuals, systems, or computers.

Each of the components of the computer 902 can communicate using a system bus 903. In some implementations, any or all of the components of the computer 902, both hardware or software (or a combination of hardware and software), may interface with each other or the interface 904 (or a combination of both) over the system bus 903 using an application programming interface (API) 912 or a service layer 913 (or a combination of the API 912 and service layer 913). The API 912 may include specifications for routines, data structures, and object classes. The API 912 may be either computer-language independent or dependent and refer to a complete interface, a single function, or even a set of APIs. The service layer 913 provides software services to the computer 902 or other components (whether or not illustrated) that are communicably coupled to the computer 902. The functionality of the computer 902 may be accessible for all service consumers using this service layer. Software services, such as those provided by the service layer 913, provide reusable, defined business functionalities through a defined interface. For example, the interface may be software written in JAVA, C++, or other suitable language providing data in extensible markup language (XML) format or other suitable format. While illustrated as an integrated component of the computer 902, alternative implementations may illustrate the API 912 or the service layer 913 as stand-alone components in relation to other components of the computer 902 or other components (whether or not illustrated) that are communicably coupled to the computer 902. Moreover, any or all parts of the API 912 or the service layer 913 may be implemented as child or sub-modules of another software module, enterprise application, or hardware module without departing from the scope of this disclosure.

The computer 902 includes an interface 904. Although illustrated as a single interface 904 in FIG. 9, two or more interfaces 904 may be used according to particular needs, desires, or particular implementations of the computer 902. The interface 904 is used by the computer 902 for communicating with other systems, in a distributed environment, that are connected to the network 930 (whether illustrated or not). Generally, the interface 904 comprises logic encoded in software or hardware (or a combination of software and hardware) operable to communicate with the network 930. More specifically, the interface 904 may comprise software supporting one or more communication protocols associated with communications such that the network 930 or interface's hardware is operable to communicate physical signals within and outside of the illustrated computer 902.

The computer 902 includes a processor 905. Although illustrated as a single processor 905 in FIG. 9, two or more processors may be used according to particular needs, desires, or particular implementations of the computer 902. Generally, the processor 905 executes instructions and manipulates data to perform the operations of the computer 902 and any algorithms, methods, functions, processes, flows, and procedures as described in the instant disclosure.

The computer 902 also includes a memory 906 that holds data for the computer 902 or other components (or a combination of both) that can be connected to the network 930 (whether illustrated or not). For example, memory 906 can be a database storing data consistent with this disclosure. Although illustrated as a single memory 906 in FIG. 9, two or more memories may be used according to particular needs, desires, or particular implementations of the computer 902 and the described functionality. While memory 906 is illustrated as an integral component of the computer 902, in alternative implementations, memory 906 can be external to the computer 902.

The application 907 is an algorithmic software engine providing functionality according to particular needs, desires, or particular implementations of the computer 902, particularly with respect to functionality described in this disclosure. For example, application 907 can serve as one or more components, modules, applications, etc. Further, although illustrated as a single application 907, the application 907 may be implemented as multiple applications 907 on the computer 902. In addition, although illustrated as integral to the computer 902, in alternative implementations, the application 907 can be external to the computer 902.

There may be any number of computers 902 associated with, or external to, a computer system containing computer 902, each computer 902 communicating over network 930. Further, the term "client," "user," and other appropriate terminology may be used interchangeably as appropriate without departing from the scope of this disclosure. Moreover, this disclosure contemplates that many users may use one computer 902, or that one user may use multiple computers 902.

Described implementations of the subject matter can include one or more features, alone or in combination. For example, in a first implementation, a computer-implemented method includes indicating, for a plurality of related sensors, a particular sensor as a target sensor and the other sensors as input sensors; training a regression model using historical data from the plurality of related sensors; applying the trained regression model to the target sensor to generate a predicted target sensor value; calculating a difference between an actual target sensor value and the predicted target sensor value; and comparing a probability of difference for the calculated difference between the actual target sensor value and the predicted target sensor value against a threshold value.

The foregoing and other described implementations can each, optionally, include one or more of the following features:

A first feature, combinable with any of the following features, comprising generating expected sensor values of the target sensor in a normal status by applying the historical data to the regression model.

A second feature, combinable with any of the previous or following features, comprising generating a probability model based at least on a measured difference between the expected sensor values and actual sensor values.

A third feature, combinable with any of the previous or following features, comprising applying the probability model to calculate the probability of difference for the calculated difference between the actual target sensor value and the predicted target sensor value.

A fourth feature, combinable with any of the previous or following features, wherein the probability model is a Gaussian mixture model.

A fifth feature, combinable with any of the previous or following features, comprising: initiating an alarm state if the comparison is below the threshold value; and indicating a normal status if the comparison is above the threshold value.

A sixth feature, combinable with any of the previous or following features, wherein the threshold value is dynamically determined.

In a second implementation, a non-transitory, computer-readable medium storing computer-readable instructions executable by a computer is configured to: indicate, for a plurality of related sensors, a particular sensor as a target sensor and the other sensors as input sensors; train a regression model using historical data from the plurality of related sensors; apply the trained regression model to the target sensor to generate a predicted target sensor value; calculate a difference between an actual target sensor value and the predicted target sensor value; and compare a probability of difference for the calculated difference between the actual target sensor value and the predicted target sensor value against a threshold value.

The foregoing and other described implementations can each, optionally, include one or more of the following features:

A first feature, combinable with any of the following features, comprising generating expected sensor values of the target sensor in a normal status by applying the historical data to the regression model.

A second feature, combinable with any of the previous or following features, comprising generating a probability model based at least on a measured difference between the expected sensor values and actual sensor values.

A third feature, combinable with any of the previous or following features, comprising applying the probability model to calculate the probability of difference for the calculated difference between the actual target sensor value and the predicted target sensor value.

A fourth feature, combinable with any of the previous or following features, wherein the probability model is a Gaussian mixture model.

A fifth feature, combinable with any of the previous or following features, comprising: initiating an alarm state if the comparison is below the threshold value; and indicating a normal status if the comparison is above the threshold value.

A sixth feature, combinable with any of the previous or following features, wherein the threshold value is dynamically determined.

In a third implementation, a computer-implemented system comprises a computer memory and a hardware processor interoperably coupled with the computer memory and configured to perform operations comprising: indicating, for a plurality of related sensors, a particular sensor as a target sensor and the other sensors as input sensors; training a regression model using historical data from the plurality of related sensors; applying the trained regression model to the target sensor to generate a predicted target sensor value; calculating a difference between an actual target sensor value and the predicted target sensor value; and comparing a probability of difference for the calculated difference between the actual target sensor value and the predicted target sensor value against a threshold value.

The foregoing and other described implementations can each, optionally, include one or more of the following features:

A first feature, combinable with any of the following features, comprising generating expected sensor values of the target sensor in a normal status by applying the historical data to the regression model.

A second feature, combinable with any of the previous or following features, comprising generating a probability model based at least on a measured difference between the expected sensor values and actual sensor values.

A third feature, combinable with any of the previous or following features, comprising applying the probability model to calculate the probability of difference for the calculated difference between the actual target sensor value and the predicted target sensor value.

A fourth feature, combinable with any of the previous or following features, wherein the probability model is a Gaussian mixture model.

A fifth feature, combinable with any of the previous or following features, comprising: initiating an alarm state if the comparison is below the threshold value; and indicating a normal status if the comparison is above the threshold value.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, that is, one or more modules of computer program instructions encoded on a tangible, non-transitory, computer-readable computer-storage medium for execution by, or to control the operation of, data processing apparatus. Alternatively or in addition, the program instructions can be encoded on an artificially generated propagated signal, for example, a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of computer-storage mediums.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, for example, a central processing unit (CPU), an FPGA (field programmable gate array), or an ASIC (application-specific integrated circuit). In some implementations, the data processing apparatus or special purpose logic circuitry (or a combination of the data processing apparatus or special purpose logic circuitry) may be hardware- or software-based (or a combination of both hardware-and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example LINUX, UNIX, WINDOWS, MAC OS, ANDROID, IOS, or any other suitable conventional operating system.

A computer program, which may also be referred to or described as a program, software, a software application, a module, a software module, a script, or code can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, for example, a CPU, an FPGA, or an ASIC.

Computers suitable for the execution of a computer program can be based on general or special purpose microprocessors, both, or any other kind of CPU. Generally, a CPU will receive instructions and data from a read-only memory (ROM) or a random access memory (RAM), or both. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable storage device, for example, a universal serial bus (USB) flash drive, to name just a few.

Computer-readable media (transitory or non-transitory, as appropriate) suitable for storing computer program instructions and data include all forms of non-volatile memory, media and memory devices, including by way of example semiconductor memory devices, for example, erasable programmable read-only memory (EPROM), electrically erasable programmable read-only memory (EEPROM), and flash memory devices; magnetic disks, for example, internal hard disks or removable disks; magneto-optical disks; and CD-ROM, DVD+/-R, DVD-RAM, and DVD-ROM disks. The memory may store various objects or data, including caches, classes, frameworks, applications, backup data, jobs, web pages, web page templates, database tables, repositories storing dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, for example, a CRT (cathode ray tube), LCD (liquid crystal display), LED (Light Emitting Diode), or plasma monitor, for displaying information to the user and a keyboard and a pointing device, for example, a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n or 802.20 (or a combination of 802.11 x and 802.20 or other protocols consistent with this disclosure), all or a portion of the Internet, or any other communication system or systems at one or more locations (or a combination of communication networks). The network may communicate with, for example, Internet Protocol (IP) packets, Frame Relay frames, Asynchronous Transfer Mode (ATM) cells, voice, video, data, or other suitable information (or a combination of communication types) between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware or software (or a combination of hardware and software), may interface with each other or the interface using an application programming interface (API) or a service layer (or a combination of API and service layer). The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers using this service layer. Software services provide reusable, defined business functionalities through a defined interface. For example, the interface may be software written in JAVA, C++, or other suitable language providing data in extensible markup language (XML) format or other suitable format. The API or service layer (or a combination of the API and the service layer) may be an integral or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented, in combination, in a single implementation. Conversely, various features that are described in the context of a single implementation can also be implemented in multiple implementations, separately, or in any suitable sub-combination. Moreover, although features may be described above as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the implementations described above should not be understood as requiring such separation or integration in all implementations, and it should be understood that the described program components and systems can generally be integrated together in a single software product or packaged into multiple software products.

Accordingly, the above description of example implementations does not define or constrain this disclosure. Other changes, substitutions, and alterations are also possible without departing from the spirit and scope of this disclosure.

Furthermore, any claimed implementation below is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A computer-implemented method, comprising:
indicating, for a plurality of related sensors, a particular sensor as a target sensor and the other sensors as input sensors;
training a regression model using historical data from the plurality of related sensors;
applying the trained regression model to the target sensor to generate a predicted target sensor value;
calculating a difference between an actual target sensor value and the predicted target sensor value; and
comparing a probability of difference for the calculated difference between the actual target sensor value and the predicted target sensor value against a threshold value.

2. The computer-implemented method of claim 1, comprising generating expected sensor values of the target sensor in a normal status by applying the historical data to the regression model.

3. The computer-implemented method of claim 2, comprising generating a probability model based at least on a measured difference between the expected sensor values and actual sensor values.

4. The computer-implemented method of claim 3, comprising applying the probability model to calculate the probability of difference for the calculated difference between the actual target sensor value and the predicted target sensor value.

5. The computer-implemented method of claim 3 or 4, wherein the probability model is a Gaussian mixture model.

6. The computer-implemented method of any one of claims 1 to 5, comprising:
initiating an alarm state if the comparison is below the threshold value; and
indicating a normal status if the comparison is above the threshold value.

7. The computer-implemented method of any one of claims 1 to 6, wherein the threshold value is dynamically determined.

8. A non-transitory, computer-readable medium storing one or more instructions executable by a computer system to perform the method according to any one of claims 1 to 7.

9. A computer system, comprising:
a computer memory; and
a hardware processor interoperably coupled with the computer memory and configured to perform operations comprising:
indicating, for a plurality of related sensors, a particular sensor as a target sensor and the other sensors as input sensors;
training a regression model using historical data from the plurality of related sensors;
applying the trained regression model to the target sensor to generate a predicted target sensor value;
calculating a difference between an actual target sensor value and the predicted target sensor value; and
comparing a probability of difference for the calculated difference between the actual target sensor value and the predicted target sensor value against a threshold value.

10. The computer system of claim 9, the operations comprising generating expected sensor values of the target sensor in a normal status by applying the historical data to the regression model.

11. The computer system of claim 10, the operations comprising generating a probability model based at least on a measured difference between the expected sensor values and actual sensor values.

12. The computer system of claim 11, the operations comprising applying the probability model to calculate the probability of difference for the calculated difference between the actual target sensor value and the predicted target sensor value.

13. The computer system of claim 11 or 12, wherein the probability model is a Gaussian mixture model.

14. The computer system of any one of claims 9 to 13, the operations comprising:
initiating an alarm state if the comparison is below the threshold value; and
indicating a normal status if the comparison is above the threshold value.
